Europäisches Patentamt

European Patent Office

Office européen des brevets

(19)

(11) **EP 1 465 028 A2**

(12) **EUROPEAN PATENT APPLICATION**

(43) Date of publication:
06.10.2004 Bulletin 2004/41

(51) Int Cl.$^7$: **G05B 19/042**, B25J 9/16

(21) Application number: 04251706.0

(22) Date of filing: 24.03.2004

(84) Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(30) Priority: 31.03.2003 JP 2003096940

(71) Applicant: **FANUC LTD**
**Minamitsuru-gun, Yamanashi 401-0597 (JP)**

(72) Inventors:
• **Watanabe, Atsushi**
**Suginami-ku Tokyo 168-0072 (JP)**

• **Ito, Takayuki**
**Minamitsuru-gun Yamanashi 401-0310 (JP)**
• **Kosaka, Tetsuya, Room 11-403 FANUC**
**Minamitsuru-gun Yamanashi 401-0511 (JP)**

(74) Representative: **Billington, Lawrence Emlyn**
**Haseltine Lake,**
**Imperial House,**
**15-19 Kingsway**
**London WC2B 6UD (GB)**

(54) **Robot offline programming system with error-correction feedback function**

(57)    An offline programming system making it easy to perform operations for correcting a positional deviation produced when a program, to which taught points have been added or position/orientation modifications have been made offline, is applied to a robot (20). A program P1 prepared by the offline programming system is applied to the robot, and a program P2 for which corrections of position deviation have been made is read in from a robot controller (21). Correction amounts E are each determined from a position/orientation deviation between corresponding taught points of the programs P1, P2. A program P3 is obtained by adding taught points to the program P1 or modifying taught points thereof. Expected correction amounts for the added or modified taught points are each calculated from the correction amounts of existing taught points near the position of the added or modified taught point. A program P4 obtained by modifying taught points in the program P3 using corresponding correction amounts is output to the robot controller which can easily correct actual position/orientation deviations because even the added or modified taught points have been modified with the expected correction amounts.

FIG. 1

P1: PROGRAM PREPARED BY OFFLINE
P2: PROGRAM WITH TAUGHT POSITIONS/ORIENTATIONS
    CORRECTED BY ROBOT CONTROLLER
E: CORRECTION AMOUNTS OF POSITIONS/ORIENTATIONS AT
    TAUGHT POINTS (CALCULATED BASED ON P1 AND P2)
P3: PROGRAM WITH TAUGHT POINTS ADDED/MODIFIED BY OFFLINE
P4: PROGRAM OBTAINED BY AMENDING PROGRAM P3 BASED ON CORRECTION
    AMOUNTS

EP 1 465 028 A2

**Description**

BACKGROUND OF THE INVENTION

1. Field of the Invention

The present invention relates to a robot offline programming system, and more particularly to modification of taught points of an operation program of a robot by the offline programming system.

2. Description of Related Art

Methods for preparation of a robot operation program include a method for teaching operating positions, etc. of a robot while actually operating the robot, and a method for preparing a program by means of an offline programming system which uses models of robot, workpiece, etc. for program preparation. A program prepared using an offline programming system includes various errors (installation errors of robot and workpiece, distortion errors of parts, deflection errors of robot). When such a program is applied to the actual robot, the workpiece position that is commanded to the robot deviates from the actual workpiece position due to the presence of errors, so that the program cannot be executed as is. In addition, it is extremely difficult to determine the aforementioned errors by theoretical calculations. Thus, before applied to the actual robot, the program prepared by the offline programming system must be corrected by correcting an error between the commanded position/orientation and the target position/orientation in respect of all the taught points.

As for a program prepared by the offline programming system and then corrected by subjecting taught points to position/orientation correction by means of the actual robot, the program is then sometimes modified by the offline programming system by adding further taught points to the program and/or modifying taught points in the program. In such a case, to make the modified program applicable to the actual robot, it is necessary to recorrect the program by performing, once again, the aforementioned position/orientation error corrections to taught points using the actual robot.

As mentioned above, even though taught points in the program prepared by the offline programming system have been corrected using the actual robot, if taught points are subsequently added or modified by means of the offline programming system, the positions/orientations at taught points must be corrected again using the actual robot. Accordingly, it is difficult to effectively utilize the offline programming system for program modification.

SUMMARY OF THE INVENTION

An offline programming system of the present invention makes it easy to perform operations for correction of taught points of a program, which is prepared by the offline programming system, for actual execution of the program by a robot controller, when the program is modified by adding new taught points and/or modifying positions/orientations at taught points of the program by the offline programming system.

According to a first aspect of the present invention, there is provided an offline programming system preparing and modifying a program for operating a robot, comprising: inputting means for inputting a second program obtained by correcting position/orientation errors at taught points of a first program based on operation of the robot, the first program being prepared and stored by the offline programming system; determining means for determining correction amounts of position/orientation at the taught points of the first program based on the stored first program and the inputted second program; calculating means for calculating an expected correction amount of position/orientation at each of new taught points added to the first program and/or modified taught points defined by modifying position/orientation at the taught point of the first program using the offline programming system, based on the determined correction amounts of position/orientation at taught points of the first program which are positioned in the vicinity of each of the added taught points or the modified taught points; and amending means for amending positions/orientations at taught points of a third program obtained by modifying the first program by the new taught points and/or the modified taught points, using the expected correction amounts to prepare a fourth program, and outputting the fourth program, thereby the offline programming system is provided with an error-correction feedback function.

According to a second aspect of the present invention, there is provided an offline programming system for preparing and modifying a program for operating a robot, comprising: inputting means for inputting a second program obtained by correcting position/orientation errors at taught points of a first program based on operation of the robot, the first program being prepared and stored by the offline programming system; determining means for determining correction amounts of position/orientation at the taught points of the first program based on the stored first program and the inputted second program; and amending means for amending position/orientation at taught points of a third program obtained by modifying the first program using the offline programming system based on the determined correction amounts of position/orientation at the taught points of the first program to prepare a fourth program, and outputting the fourth program.

In the first aspect of the present invention, the offline programming system may comprise outputting means for outputting a third program obtained by modifying the first program by the new taught points and/or the modified taught points, and correction amounts of taught points of the third program including the expected correction amounts as separate files, instead of the amending means for amending positions/orientations at taught points of the third program using the expected correction amounts.

In the second aspect of the present invention, the offline programming system may comprise outputting means for outputting a third program obtained by modifying the first program using the offline programming system, and the determined correction amounts for taught points of the third program as separate files, instead of the amending means for amending position/orientation at taught points of the third program based on the determined correction amounts of position/orientation at the taught points of the first program

According to a third aspect of the present invention, there is provided an offline programming system for preparing and modifying a program for operating a robot, comprising: storage means storing correction amounts of position/orientation errors at taught points of a first program determined based on operation of the robot, the first program being prepared by the offline programming system; calculating means for calculating an expected correction amount of position/orientation at each of new taught points added to the first program and/or modified taught points defined by modifying position/orientation at the taught points of the first program using the offline programming system, based on the stored correction amounts of position/orientation at taught points of the first program which are positioned in the vicinity of each of the added taught points or the modified taught points; and amending means for amending positions/orientations at taught points of a second program obtained by modifying the first program by the new taught points and/or the modified taught points, using the expected correction amounts to prepare a third program, and outputting the third program.

According to a fourth aspect of the present invention, there is provided an offline programming system for preparing and modifying a program for operating a robot, comprising: storage means storing correction amounts of position/orientation errors at taught points of a first program determined based on operation of the robot, the first program being prepared by the offline programming system; and amending means for amending position/orientation at taught points of a second program obtained by modifying the first program using the offline programming system based on the stored correction amounts of position/orientation at the taught points of the first program to prepare a third program, and outputting the third program.

In the third aspect of the present invention, the offline programming system may comprise outputting means for outputting a second program obtained by modifying the first program by the new taught points and/or the modified taught points, and correction amounts of taught points of the second program including the expected correction amounts as separate files, instead of the amending means for amending positions/orientations at taught points of the second program using the expected correction amounts.

In the fourth aspect of the present invention, the offline programming system may comprise outputting means for outputting a second program obtained by modifying the first program using the offline programming system, and the stored correction amounts for taught points of the second program as separate files, instead of the amending means for amending position/orientation at the taught points of the second program based on the stored correction amounts.

According to a fifth aspect of the present invention, there is provided an offline programming system for preparing and modifying a program for operating a robot by a robot controller, comprising: inputting means for inputting correction amounts of position/orientation errors at taught points of a first program from the robot controller, which are determined based on operation of the robot, the first program being prepared by the offline programming system; calculating means for calculating an expected correction amount of position/orientation at each of new taught points added to the first program and/or modified taught points defined by modifying position/orientation at the taught points of the first program using the offline programming system, based on the inputted correction amounts of position/orientation at taught points of the first program which are positioned in the vicinity of each of the added taught points or the modified taught points; and amending means for amending positions/orientations at taught points of a second program obtained by modifying the first program by the new taught points and/or the modified taught points, using the expected correction amounts to prepare a third program, and outputting the third program.

According to a sixth aspect of the present invention, there is provided an offline programming system for preparing and modifying a program for operating a robot by a robot controller, comprising: inputting means for inputting correction amounts of position/orientation errors at taught points of a first program from the robot controller, which are determined based on operation of the robot, the first program being prepared by the offline programming system; and amending means for amending position/orientation at taught points of a second program obtained by modifying the first program using the offline programming system based on the inputted correction amounts of position/orientation at the taught points of the first program to prepare a third program, and outputting the third program.

In the fifth aspect of the present invention, the offline programming system may comprise outputting means for outputting a second program obtained by modifying the first program by the new taught points and/or the modified taught points, and correction amounts of taught points of the second program including the expected correction amounts as separate files, instead of the amending means for amending positions/orientations at taught points of the second program using the expected correction amounts.

In the sixth aspect of the present invention, the offline programming system may comprise outputting means for outputting a second program obtained by modifying the first program using the offline programming system, and the inputted correction amounts for taught points of the second program as separate files, instead of the amending means for amending position/orientation at taught points of the second program based on the inputted correction amounts.

The calculation means may comprises: means for determining distances from each of the new taught points or the modified taught points to the taught points in the vicinity of each of the new taught points or the modified taught points; and means for judging whether any of the determined distances is equal to or larger than a predetermined distance, and the expected correction amount of the new taught point or the modified taught point may be set to zero if it is judged that any of the determined distances is equal to or larger than the predetermined distance.

BRIEF DESCRIPTION OF THE DRAWINGS

FIG. 1 is a view for explaining the outline of a first embodiment of this invention;
FIG. 2 is a view for explaining the outline of a second embodiment of this invention;
FIG. 3 is a view for explaining the outline of a third embodiment of this invention;
FIG. 4 is a view for explaining the outline of a fourth embodiment of this invention;
FIG. 5 is a view for explaining the outline of a fifth embodiment of this invention;
FIG. 6 is a view for explaining the outline of a sixth embodiment of this invention;
FIG. 7 is a block diagram showing essential part of an offline programming system used to embody the respective embodiments of this invention;
FIG. 8 is a flowchart of operation processing in the first embodiment of this invention;
FIG. 9 is a flowchart of operation processing in the second embodiment of this invention;
FIG. 10 is a flowchart of operation processing in the third embodiment of this invention;
FIG. 11 is a flowchart of operation processing in the fourth embodiment of this invention;
FIG. 12 is a flowchart of operation processing in the fifth embodiment of this invention;
FIG. 13 is a flowchart of operation processing in the sixth embodiment of this invention; and
FIG. 14 is a flowchart of processing of adding/modifying taught points and of calculating expected correction amounts in the operation processing of the respective embodiments.

DETAILED DESCRIPTION

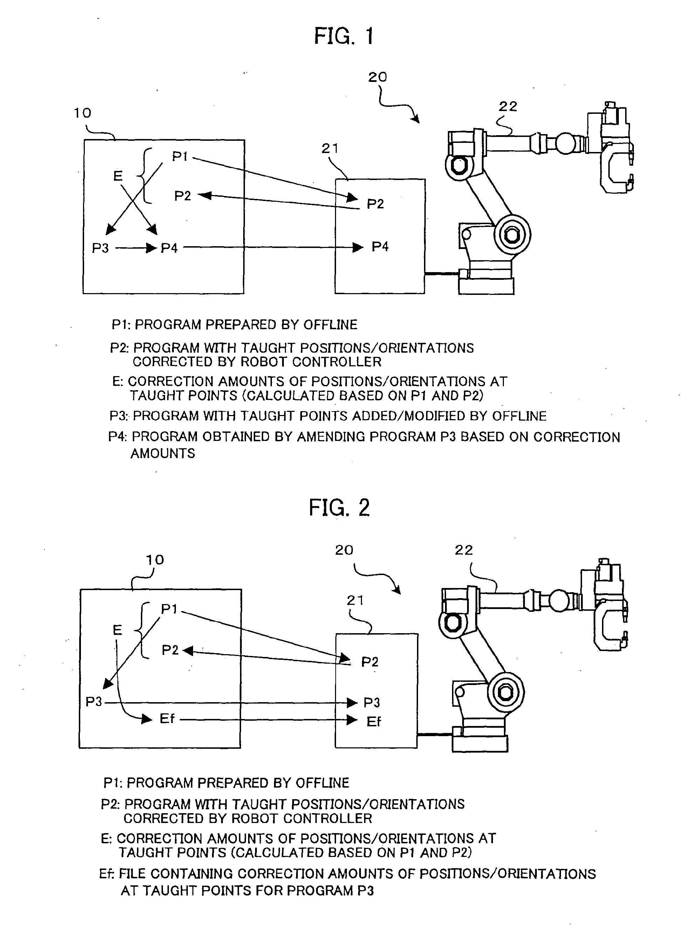

FIG. 1 is a view for explaining the outline of a first embodiment of this invention.

An operation program P1 of a robot 20 is prepared by means of an offline programming system 10, and is applied to the robot 20. Using a robot controller 21 and a robot mechanism section 22, error corrections of commanded positions/orientations are made with respect to target positions/orientations, thus correcting positions/orientations at programmed taught points to thereby obtain a corrected program P2 which is then stored in the robot controller 21.

According to the first embodiment, to modify the program P2 by adding taught points to the program P2 or by subjecting the program P2 to position/orientation modification after the program P1 is prepared by the offline programming system 10 and then applied to the actual robot to correct positions of taught points to obtain the program P2, the offline programming system 10 first reads in the corrected program P2 from the robot controller 21. Then, the offline programming system 10 determines and stores correction amounts E, i.e., deviations in position/orientation between taught points of the original program P1 stored therein and those of the program P2 corrected by the error corrections.

When taught points are added to the offline prepared program P1 or positions/orientations at taught points in the program P1 are modified, expected correction amounts for the taught points added or modified in position/orientation are each determined based on correction amounts for a plurality of taught points near the position of a corresponding one of the added or modified taught points. Then, a program P3, corresponding to the program P1 prepared offline but modified from the program P1 by addition of taught points or by position/orientation modifications, is amended using the correction amounts E already determined, to prepare a program P4 subjected to the modification and amendment and the prepared program P4 is output to the robot controller 21.

The correction amounts for the taught points added or modified in position/orientation are each expected and determined from the correction amounts for taught points near the position of the taught point in question. Thus, the expected correction amount is not largely deviated from the inherently required correction amount. Since even the added or modified taught points are not largely deviated from the target positions/orientations, operations of position/ orientation error corrections to taught points in the modified program P4 can easily be carried out.

The positions/orientations at taught points including the added and/or modified taught points are corrected by actually operating the robot 20, and then the program subject to position/orientation corrections is stored in the robot controller 21. If further addition and/or modification of taught points is made, the program is corrected again. The resultant renewed program (new program P2) is read into the offline programming system 10. Then, correction amounts are determined as previously mentioned on the basis of the new program P2 and the original program P1 prepared offline, and expected correction amounts for the added and/or modified taught points are also determined as previously mentioned. This operation is repeatedly performed until satisfaction is attained.

FIG. 2 is a view for explaining the outline of a second embodiment of this invention. As compared to the first embodiment, the second embodiment is different only in data that is output to the robot controller 21. Specifically, in the first embodiment, correction amounts E are added to taught points in the program P3, obtained by adding taught points to the offline prepared program P1 or by subjecting the program P1 to position/orientation modification, to thereby obtain the modified program P4 which is then output to the robot controller 21. Unlike this, in the second embodiment, the program P3, to which taught points are added or for which position/orientation modification is made, and correction amounts E for taught points, including expected correction amounts for added or modified taught points, are output to the robot controller 21 in the form of separate files.

In executing the received program P3, the robot controller 21 corrects the positions/orientations at respective taught points on the basis of the received correction amounts E, and then drives the robot mechanism section. When the robot 20 is actually driven, the position/orientation at each taught point is corrected, and the correction amount of corresponding taught point in the correction amount file Ef is rewritten for renewal. When taught points are added and/ or modified in position/orientation again, the renewed correction amount file Ef is delivered to the offline programming system 10, and then expected correction amounts for the newly added and/or modified taught points are determined using the correction amount file Ef. On this point, refer to fifth and sixth embodiments mentioned later.

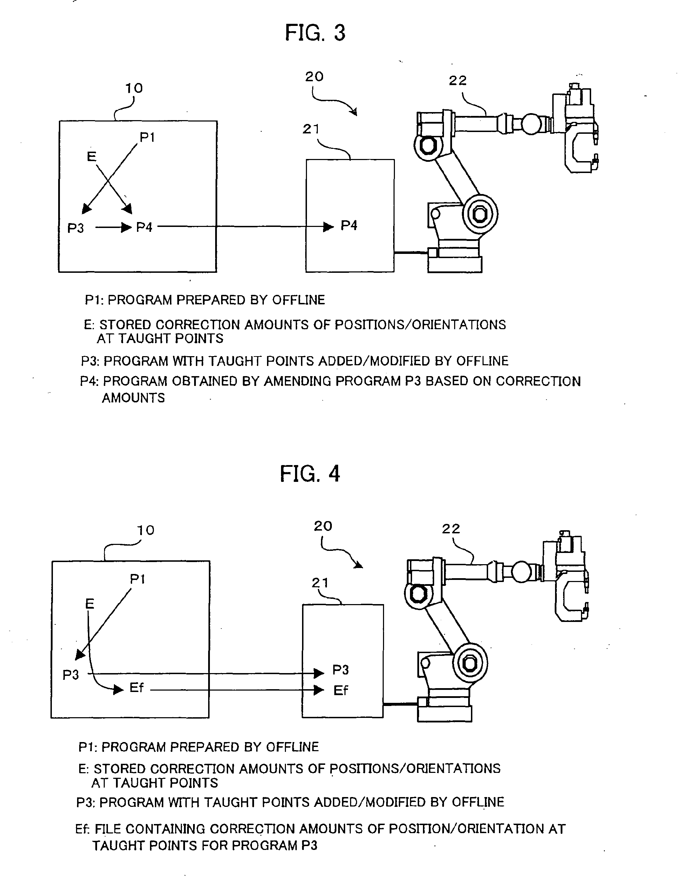

FIG. 3 is a view for explaining the outline of a third embodiment of this invention. In the third embodiment, when correction amounts E for taught points are already stored in the offline programming system 10, these correction amounts E are used to determine expected correction amounts of positions/orientations at added and/or modified taught points. In other respects, the third embodiment is the same as the first embodiment. The correction amounts are utilized to amend taught points in a program P3 obtained by adding and/or modifying taught points, and the resultant modified and amended program P4 is output to the robot controller 21.

In the third embodiment, the correction amounts and expected correction amounts for taught points in the program after modification are already determined when the program P1 prepared by the offline programming system 10 is modified by addition of taught points and/or modification of positions/orientations at taught points. When the modified program is executed by the robot 20, the program is sometimes found to need to be further modified, such as by addition and/or modification of taught points. To this end, the robot program for which the correction amounts have been adjusted by the robot 20 may be read in from the robot controller 21 again to determine the correction amounts for program modification, as in the first embodiment. Alternatively, if taught points added and/or modified in the preceding program modification are small in number, it may be better, from the viewpoint of efficiency of operation, to use the already stored correction amounts in determining expected correction amounts for currently added and/or modified taught points, which amounts are then output to the robot controller 21 which in turn performs operations of adjusting the correction amounts for the added and/or modified taught points in the preceding and current program modifications. If this is the case, the third embodiment is applied.

FIG. 4 is a view for explaining the outline of a fourth embodiment of this invention. In case that correction amounts E for taught points are already stored in the offline programming system 10, the fourth embodiment utilizes the correction amounts E to determine expected amounts of position/orientation correction for added and/or modified taught points. A correction amount file, containing the stored correction amounts E for taught points and the expected correction amounts for the added and/or modified taught points, is delivered to the robot controller 21, and a program P3 subject to addition and/or modification of taught points is also delivered to the robot controller 21. Also in the fourth embodiment, the robot controller 21 operates according to the program P3 and the correction amounts E in the correction amount file, and when a position/orientation error of each taught point is corrected, the correction amount E for the corresponding taught point in the correction amount file Ef is corrected for renewal.

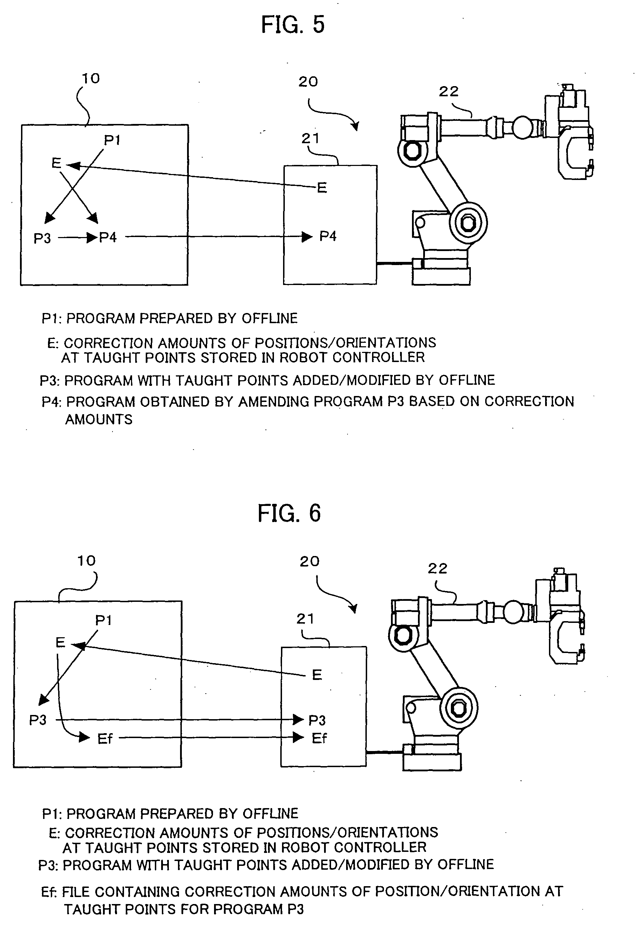

FIG. 5 is a view for explaining the outline of a fifth embodiment of this invention. In case that correction amounts E for the program P1 to which teaching positions are added or for which modifications are made are stored in the robot controller 21 (as in the second and fourth embodiments, etc.), the fifth embodiment utilizes the correction amounts E to determine expected correction amounts for the added or modified taught points.

As in the second and fourth embodiments individually shown in FIGS. 2 and 4, correction amounts E for taught points in the offline prepared program P3 are stored in the robot controller 21. The fifth embodiment is applied to a case where the correction amounts E are used to add taught points to or modify taught points in the offline programmed program P3, for instance. Since the program P3 shown in FIGS. 2 and 3 is executed by the robot 20 and the correction amounts for taught points in the program P3 are stored, the program P1 of FIG. 5 corresponds to the program P3 shown in FIGS. 2 and 3.

When a new program P3 is prepared by adding taught points to the program P1 and/or by modifying positions/ orientations at taught points in the program P1, expected correction amounts for the added and/or modified taught points are determined based on the correction amounts E read in from the robot controller 21, and then positions/ orientations at taught points in the program P3, to which taught points are added or for which modifications to taught points are made, are amended using the correction amounts E or the determined expected correction amounts, to thereby prepare a new program P4 which is then output to the robot controller.

FIG. 6 is a view for explaining the outline of a sixth embodiment of this invention. As in the fifth embodiment, the sixth embodiment utilizes correction amounts stored in the robot controller 21 to determine correction amounts for taught points that are added or modified. The sixth embodiment differs from the fifth embodiment shown in FIG. 5 only in that the program P3, to which taught points are added and/or for which modifications to taught points are made, and a file Ef of correction amounts E, including expected correction amounts for the added and/or modified taught points, are output to the robot controller 21 independently of each other. Explanations on this point will be omitted since such explanations have been given in the second and fourth embodiments.

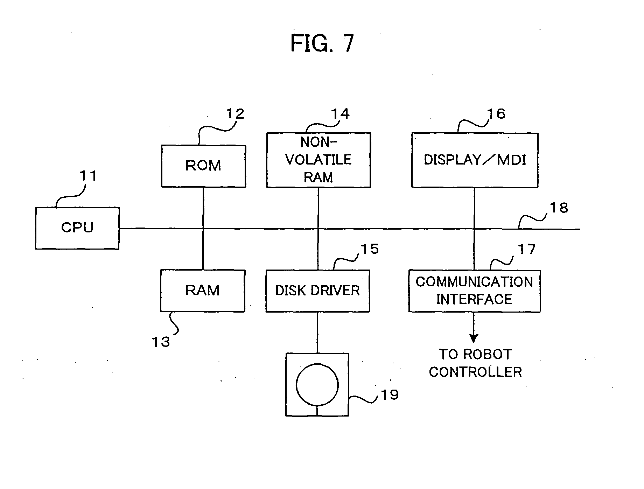

FIG. 7 is a block diagram showing an essential part of the offline programming system 10 used to embody the aforementioned embodiments. Connected through a bus 18 to a processor (CPU) 11 are a ROM 12, a RAM 13, a non-volatile RAM 14, a disk driver 15, a display/MDI 16, and a communication interface 17.

The processor 11 controls the overall system based on a system program stored in the ROM 12. The RAM 13 is utilized for temporal data storage or the like. The non-volatile RAM 14 stores a robot operation program prepared by the offline programming system, and the like. The disk driver 15 is mounted with a flexible disk 19 stored with the program P2 and correction amounts E, which are then stored in the robot controller 21.

The display/MDI 16 comprises a CRT, liquid or other display, and manual data input means such as keyboard, mouse, or the like for inputting data and various commands. The communication interface 17 is connected to the robot controller 21 through communication lines such as Ethernet (trademark).

This embodiment shows by way of example a case where the flexible disk 19 is used as storage medium. Alternatively, other storage medium such as a compact disk may be used. In this case, the disk driver 15 is constituted by a CD driver for reading out data from the compact disk.

The aforementioned offline programming system 10 is not different in construction from the conventionally known offline programming system, except for software used to add and modify taught points in the robot operation program.

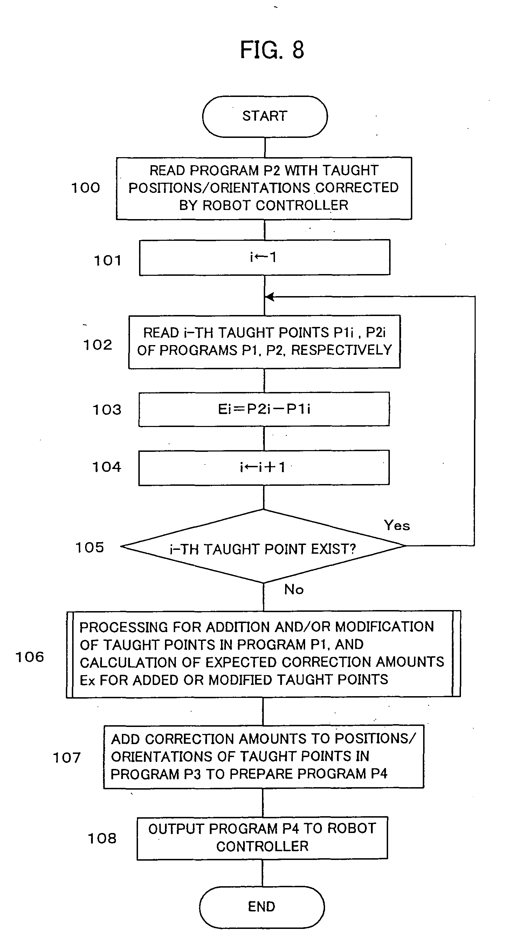

FIG. 8 is a flowchart of processing for adding and modifying taught points in the robot operation program executed by the offline programming system 10 according to the first embodiment.

When a program modification command is input, the processor 11 reads in the program P2, including taught points whose positions/orientations having been corrected, from the robot controller 21 through the communication interface 17 and communication lines. Alternatively, the program P2 stored in the robot controller 21 is written into a flexible disk (storage medium) 19, and the program P2 stored in the flexible disk (storage medium) 19 is read in through the disk driver 15 (Step 100).

Then, an index i is set to "1" (Step 101), and taught points P1i and P2i specified by the index i are read in from the offline prepared program P1 and the program P2 (which is obtained by correcting errors between positions/ orientations at taught points in the program P1 and actual target positions/orientations) (Step 102). Next, a difference between the taught points is determined and stored as a correction amount Ei (Step 103).

Assuming that positions/orientations at the taught points P1i, P2i are represented as:

$$P1i = (x1i, y1i, z1i, w1i, p1i, r1i)$$

and

$$P2i = (x2i, y2i, z2i, w2i, p2i, r2i),$$

the correction amount Ei can be determined as:

$$Ei = P2i\text{-}P1i = (Exi, Eyi, Ezi, Ewi, Epi, Eri) = (x2i\text{-}x1i, y2i\text{-}y1i, z2i\text{-}z1i,$$

w2i-wli, p2i-p1i, r2i-rli).

Next, "1" is added to the index i (Step 104), and a determination is made as to whether or not i-th taught point exists (Step 105). If the i-th taught point exists, the processing of Steps 102-105 is repeatedly executed to determine the correction amounts Ei for the taught points.

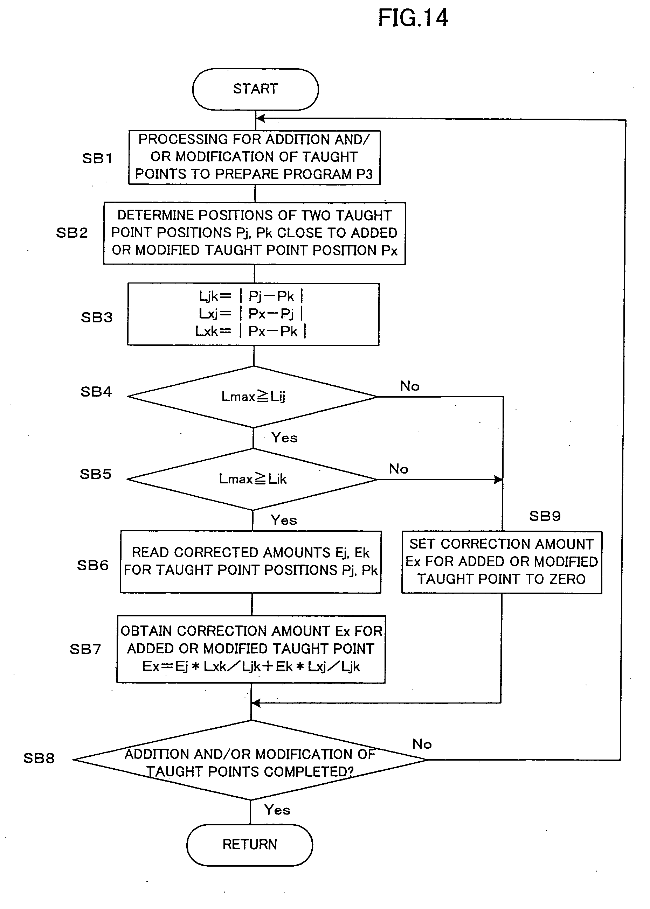

After completion of determination of correction amounts Ei, processing is performed for adding and/or modifying taught points and for calculating expected correction amounts for the added and/or modified taught points (Step 106). This processing is shown in FIG. 14. When an operator adds one or more taught points and/or modifies the position/orientation at one or more taught points already taught, the processing for calculating expected correction amounts for the added and/or modified taught points is started (Step SB1).

Out of the existing taught points, taught points Pj, Pk whose positions are closest and next closest to the position Px of the added or modified taught point concerned are first determined (Step SB2). Meanwhile, the existing taught points includes taught points whose positions/orientations were subject to modification. Then, a distance Ljk between positions of the two taught points is determined, and distances Lxj, Lxk between the position Px of the added or modified taught point and the positions of the two taught points are determined (Step SB3), as shown below:

$$Ljk = |Pj - Pk|,$$

$$Lxj = |Px - Pj|,$$

and

$$Lxk = |Px - Pk|,$$

where the distances are each determined as the square root of the square sum of the coordinate differences between the positions (x, y, z) of the taught points.

Then, whether both the distances Lxj, Lxk between the position Px of the added or modified taught point and the positions Pj, Pk of the two close points are equal to or less than a preset value Lmax (Steps SB4 and SB5). If the position of the added or modified taught point is separated more than the preset distance Lmax from the position of at least one existing taught point, it is considered that the determined correction amounts for the existing taught points should not be used for reference purposes since the separation distance is too large, and hence the correction amount Ex for the added or modified taught point is set to "0" (Step SB9), whereupon the flow advances to Step SB8.

On the other hand, if both the distances Lxj, Lxk between the position Px of the added or modified taught point and the positions Pj, Pk of the two close taught points are equal to or less than the preset value Lmax, correction amounts Ej, Ek stored with respect to the two taught points Pj, Pk are read in (Step SB6), and an expected correction amount Ex with respect to the position Px of the added or modified taught point is determined by calculation using the following formula (1), and is then stored so as to correspond to the added or modified taught point (Step SB7).

$$Ex = (Ej*Lxk/Ljk) + (Ek*Lxj/Ljk) \tag{1}$$

Next, whether a completion command for completing addition and/or modification of taught points is input is determined (Step SB8). If no command is input, the flow returns to Step SB1 to perform the processing of Step SB1 and subsequent Steps, i.e., the processing of addition or modification of taught point and of calculating the expected correction amount Ex for the added or modified taught point.

When the completion command is input after the addition and/or modification for all the taught points is completed so that the program P3 is obtained to which taught points have been added and/or in which taught points have been modified (Step SB8), the flow returns to the main processing shown in FIG. 8 in which positions/orientations at respective taught points are each modified, by using the correction amount Ex determined at Step 106 for the taught point added to or in the program P3, obtained by adding taught points to and/or modifying taught points in the program P1, or by using the correction amount Ei determined at Step 103 for the existing taught point, whereby an amended program P4 is prepared (Step 107). The amended program P4 is output to the robot controller 21 through the communication interface 17 (Step 108). Alternatively, the modified program P4 is stored in the flexible disk 19 through the disk driver 15, and is delivered to the robot controller 21 through the flexible disk 19.

Although illustrations are omitted, the offline programming system 10 stores the program P3 to which taught points are added and/or in which taught points are modified, instead of the program P1. (Alternatively, the program P1 may be retained together with the program P3.) The program can be utilized when taught points are added or modified again. In the program P3, correction amounts are not subject to corrections or modifications, and positions/orientations at taught points are determined based on models in the offline programming system 10 and then stored therein. Therefore, a robot operation can be simulated based on the program P3, without a hitch or interference between models of robot, workpiece, etc. As for the program P2 or P4, it includes taught points corrected or modified with correction amounts. More specifically, using correction amounts, corrections or modifications have been made to the taught points in the program prepared by means of the offline programming system 10, whereas models of robot and workpiece in the offline programming system do not entail errors, and accordingly, coordination between the program and the robot/workpiece is lost. For this reason, it is impossible for the offline programming system 10 to carry out a simulation of robot operation based on such program.

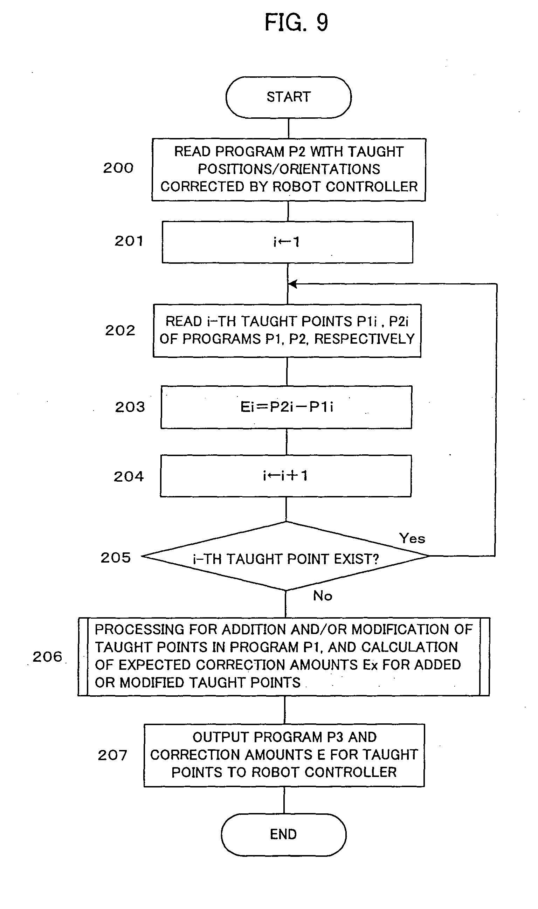

FIG. 9 is a flowchart showing the processing executed in the second embodiment of this invention for adding/modifying taught points, for determining expected correction amounts Ex for the added/modified taught points, and for outputting the correction amounts.

The processing of Steps 200-206 is the same as the processing of Steps 100-106 in the first embodiment shown in FIG. 8. Only the processing of Step 207 differs from the first embodiment shown in FIG. 8.

Thus, as in the first embodiment, a new program P3 is prepared by adding taught points and/or by modifying positions/orientations at existing taught points, and then expected correction amounts Ex for the added and/or modified taught points are expected and determined from correction amounts of the existing taught points. In the second embodiment, the new program P3, and the correction amounts and expected correction amounts that are stored so as to corresponds to the taught points in the program P3 are output in the form of separate files to the robot controller 21 or the storage medium (flexible disk). On this point alone, the second embodiment differs from the first embodiment.

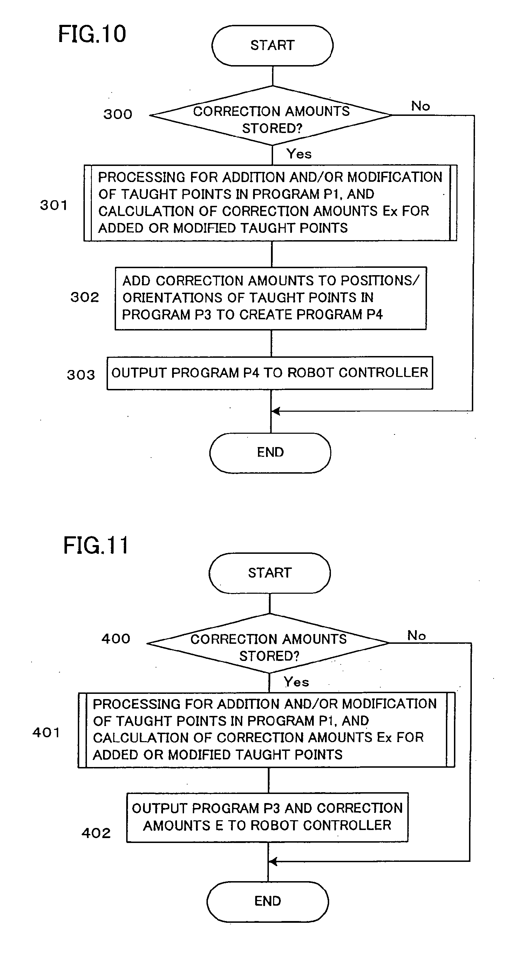

FIG. 10 is a flowchart of processing in a third embodiment of this invention. In the third embodiment, the processing of adding and/or modifying taught points and of calculating expected correction amounts for the taught points is made in a condition that correction amounts E for the taught points are already stored in the offline programming system 10.

When a teaching-point modification command is input, the processor 11 first determines whether correction amounts for the program P1 of interest are stored (Step 300). If the correction amounts are not stored, then the processing is completed. If the correction amounts are stored, processing of adding taught points, modifying positions/orientations at taught points, and calculating expected correction amounts for the added and/or modified taught points is executed (Step 301). In this processing which is the same as those in the first and second embodiments, the processing shown in FIG. 14 is executed. Specifically, a new program P3, having been prepared by adding taught points to the offline prepared program P1 and/or by modifying positions/orientations at taught points in the program P1, is amended by using correction amounts Ei and expected correction amounts Ex individually corresponding to taught points, whereby a program P4 whose taught points are modified and amended with the correction amounts is prepared (Step S302). The prepared program P4 is output to the robot controller 21 or the flexible disk 19 (Step S303).

FIG. 11 is a flowchart of processing in a fourth embodiment of this invention. The fourth embodiment performs processing which is substantially the same as the processing in the third embodiment shown in FIG. 10. Steps 400 and 401 are the same as Steps 300 and 301 in the third embodiment. Processing of Step 402 alone is different. Specifically, the forth embodiment only differs from the third embodiment in that a program P3, obtained by adding taught point to the program P1 and/or by modifying positions/orientations at taught points in the program P1, and correction amounts E for taught points in the program P3 (i.e., expected correction amounts determined for the added or modified taught points and correction amounts Ei for taught points other than the added or modified taught points) are output to the robot controller 21 or the flexible disk 19.

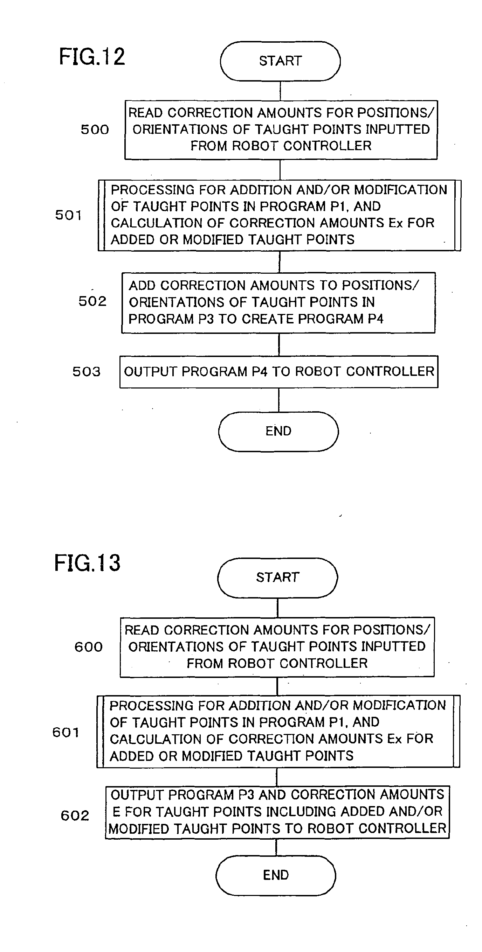

FIG. 12 is a flowchart showing a fifth embodiment of this invention. The fifth embodiment only differs from the third embodiment in that it includes processing of Step 500 in which amounts of position/orientation correction for taught points are read in through the robot controller 21 or the flexible disk 19. Processing of Steps 501-503 is the same as the processing of Steps 301-303 of the third embodiment shown in FIG. 10.

FIG. 13 is a flowchart showing a sixth embodiment of this invention. The sixth embodiment only differs from the fourth embodiment in that it includes processing of Step 600 in which correction amounts of positions/orientations at taught points are read in through the robot controller 21 or the flexible disk 19. Processing of Steps 601 and 602 is the same as the processing of Steps 401 and 402 of the fourth embodiment shown in FIG. 11.

As mentioned above, in each embodiment of this invention, when a new taught point is added to a robot operation program prepared using the offline programming system 10 or when a taught point taught beforehand is subject to position/orientation modification, an expected correction amount for the added or modified taught point is estimated based on correction amounts already determined for existing taught points, and the expected correction amount is used as correction amount for the added or modified taught point. Thus, when the position/orientation at the newly added or modified taught point is found to be modified while executing a robot operation program based on expected correction amounts for the added and/or modified taught points and correction amounts for non-altered existing taught points, such modification can be made with extreme ease. In accordance with the expected correction amount, the robot already assumes a position/orientation close to the target position/orientation, and thus an error between the commanded position/orientation and the target position/orientation is small, making it easy to finally correct the position/orientation of the robot.

In the embodiments, the expected correction amount is determined when a taught point is added and when the position/orientation at an existing taught point is modified. However, the positions/orientations at taught points are seldom greatly changed when they are modified. Thus, the expected correction amount may not be determined when a taught point is subject to position/orientation modification. The already stored correction amount corresponding to the taught point before the position/orientation modification may be used as the correction amount after the modification. To this end, the processing shown in FIG. 14 may determine which of addition or modification of a taught point has been performed at Step SB1, and the processing of Step SB2 and the subsequent Steps may be executed if the taught point has been added, whereas if the taught point has been modified, the flow may advance to Step SB8 instead of Step SB2.

According to this invention, man-hours needed to apply, at the worksite, the program prepared using the offline programming system can be greatly reduced, whereby the offline programming system can be effectively used to modify the robot program in practice. Considering that various errors such as installation errors of robot and workpiece, distortion errors of parts, deflection errors of robot are extremely difficult to be determined by theoretical calculations, this invention causes correction amounts, obtained when these errors are corrected, to be fed back into the offline programming system, so that the correction amounts are used to estimate expected correction amounts for added or modified taught points, making it possible to correct various errors in a comprehensive manner. Since the program in the offline programming system is not subject to corrections or modifications, a simulation based on the program can be performed in the offline programming system even after the program is corrected or modified.

**Claims**

1.  An offline programming system for preparing and modifying a program for operating a robot, comprising:

    inputting means for inputting a second program obtained by correcting position/orientation errors at taught points of a first program based on operation of the robot, the first program being prepared and stored by the offline programming system;
    determining means for determining correction amounts of position/orientation at the taught points of the first program based on the stored first program and the inputted second program;
    calculating means for calculating an expected correction amount of position/orientation at each of new taught points added to the first program and/or modified taught points defined by modifying position/orientation at the taught point of the first program using the offline programming system, based on the determined correction amounts of position/orientation at taught points of the first program which are positioned in the vicinity of each of the added taught points or the modified taught points; and
    amending means for amending positions/orientations at taught points of a third program obtained by modifying the first program by the new taught points and/or the modified taught points, using the expected correction amounts to prepare a fourth program, and outputting the fourth program.

2.  An offline programming system for preparing and modifying a program for operating a robot, comprising:

    inputting means for inputting a second program obtained by correcting position/orientation errors at taught points of a first program based on operation of the robot, the first program being prepared and stored by the offline programming system;
    determining means for determining correction amounts of position/orientation at the taught points of the first program based on the stored first program and the inputted second program; and
    amending means for amending position/orientation at taught points of a third program obtained by modifying the first program using the offline programming system based on the determined correction amounts of position/orientation at the taught points of the first program to prepare a fourth program, and outputting the fourth program.

3.  An offline programming system for preparing and modifying a program for operating a robot, comprising:

inputting means for inputting a second program obtained by correcting position/orientation errors at taught points of a first program based on operation of the robot, the first program being prepared and stored by the offline programming system;

determining means for determining correction amounts of position/orientation at the taught points of the first program based on the stored first program and the inputted second program;

calculating means for calculating an expected correction amount of position/orientation at each of new taught points added to the first program and/or modified taught points defined by modifying position/orientation at the taught point of the first program using the offline programming system, based on the determined correction amounts of position/orientation at taught points of the first program which are positioned in the vicinity of each of the added taught points or the modified taught points; and

outputting means for outputting a third program obtained by modifying the first program by the new taught points and/or the modified taught points, and correction amounts of taught points of the third program including the expected correction amounts as separate files.

4. An offline programming system for preparing and modifying a program for operating a robot, comprising:

inputting means for inputting a second program obtained by correcting position/orientation errors at taught points of a first program based on operation of the robot, the first program being prepared and stored by the offline programming system;

determining means for determining correction amounts of position/orientation at the taught points of the first program based on the stored first program and the inputted second program; and

outputting means for outputting a third program obtained by modifying the first program using the offline programming system, and the determined correction amounts for taught points of the third program as separate files.

5. An offline programming system for preparing and modifying a program for operating a robot, comprising:

storage means storing correction amounts of position/orientation errors at taught points of a first program determined based on operation of the robot, the first program being prepared by the offline programming system;

calculating means for calculating an expected correction amount of position/orientation at each of new taught points added to the first program and/or modified taught points defined by modifying position/orientation at the taught points of the first program using the offline programming system, based on the stored correction amounts of position/orientation at taught points of the first program which are positioned in the vicinity of each of the added taught points or the modified taught points; and

amending means for amending positions/orientations at taught points of a second program obtained by modifying the first program by the new taught points and/or the modified taught points, using the expected correction amounts to prepare a third program, and outputting the third program.

6. An offline programming system for preparing and modifying a program for operating a robot, comprising:

storage means storing correction amounts of position/orientation errors at taught points of a first program determined based on operation of the robot, the first program being prepared by the offline programming system; and

amending means for amending position/orientation at taught points of a second program obtained by modifying the first program using the offline programming system based on the stored correction amounts of position/orientation at the taught points of the first program to prepare a third program, and outputting the third program.

7. An offline programming system for preparing and modifying a program for operating a robot, comprising:

storage means storing correction amounts of position/orientation errors at taught points of a first program determined based on operation of the robot, the first program being prepared by the offline programming system;

calculating means for calculating an expected correction amount of position/orientation at each of new taught points added to the first program and/or modified taught points defined by modifying position/orientation at the taught points of the first program using the offline programming system, based on the stored correction amounts of position/orientation at taught points of the first program which are positioned in the vicinity of each of the added taught points or the modified taught points; and

outputting means for outputting a second program obtained by modifying the first program by the new taught points and/or the modified taught points, and correction amounts of taught points of the second program including the expected correction amounts as separate files.

8. An offline programming system for preparing and modifying a program for operating a robot, comprising:

storage means storing correction amounts of position/orientation errors at taught points of a first program determined based on operation of the robot, the first program being prepared by the offline programming system; and

outputting means for outputting a second program obtained by modifying the first program using the offline programming system, and the stored correction amounts for taught points of the second program as separate files.

9. An offline programming system for preparing and modifying a program for operating a robot by a robot controller, comprising:

inputting means for inputting correction amounts of position/orientation errors at taught points of a first program from the robot controller, which are determined based on operation of the robot, the first program being prepared by the offline programming system;

calculating means for calculating an expected correction amount of position/orientation at each of new taught points added to the first program and/or modified taught points defmed by modifying position/orientation at the taught points of the first program using the offline programming system, based on the inputted correction amounts of position/orientation at taught points of the first program which are positioned in the vicinity of each of the added taught points or the modified taught points; and

amending means for amending positions/orientations at taught points of a second program obtained by modifying the first program by the new taught points and/or the modified taught points, using the expected correction amounts to prepare a third program, and outputting the third program.

10. An offline programming system for preparing and modifying a program for operating a robot by a robot controller, comprising:

inputting means for inputting correction amounts of position/orientation errors at taught points of a first program from the robot controller, which are determined based on operation of the robot, the first program being prepared by the offline programming system; and

amending means for amending position/orientation at taught points of a second program obtained by modifying the first program using the offline programming system based on the inputted correction amounts of position/orientation at the taught points of the first program to prepare a third program, and outputting the third program.

11. An offline programming system for preparing and modifying a program for operating a robot by a robot controller, comprising:

inputting means for inputting correction amounts of position/orientation errors at taught points of a first program from the robot controller, which are determined based on operation of the robot, the first program being prepared by the offline programming system;

calculating means for calculating an expected correction amount of position/orientation at each of new taught points added to the first program and/or modified taught points defined by modifying position/orientation at the taught points of the first program using the offline programming system, based on the inputted correction amounts of position/orientation at taught points of the first program which are positioned in the vicinity of each of the added taught points or the modified taught points; and

outputting means for outputting a second program obtained by modifying the first program by the new taught points and/or the modified taught points, and correction amounts of taught points of the second program including the expected correction amounts as separate files.

12. An offline programming system for preparing and modifying a program for operating a robot by a robot controller, comprising:

inputting means for inputting correction amounts of position/orientation errors at taught points of a first program from the robot controller, which are determined based on operation of the robot, the first program being prepared by the offline programming system; and

outputting means for outputting a second program obtained by modifying the first program using the offline programming system, and the inputted correction amounts for taught points of the second program as separate files.

13. An offline programming system according to any one of claim 1, 3, 5, 7, 9 and 11, wherein said calculation means comprises: means for determining distances from each of the new taught points or the modified taught points to the taught points in the vicinity of each of the new taught points or the modified taught points; and means for judging whether any of the determined distances is equal to or larger than a predetermined distance, wherein the expected correction amount of the new taught point or the modified taught point is set to zero, if it is judged that any of the determined distances is equal to or larger than the predetermined distance.

# FIG. 1

P1: PROGRAM PREPARED BY OFFLINE

P2: PROGRAM WITH TAUGHT POSITIONS/ORIENTATIONS
CORRECTED BY ROBOT CONTROLLER

E: CORRECTION AMOUNTS OF POSITIONS/ORIENTATIONS AT
TAUGHT POINTS (CALCULATED BASED ON P1 AND P2)

P3: PROGRAM WITH TAUGHT POINTS ADDED/MODIFIED BY OFFLINE

P4: PROGRAM OBTAINED BY AMENDING PROGRAM P3 BASED ON CORRECTION
AMOUNTS

# FIG. 2

P1: PROGRAM PREPARED BY OFFLINE

P2: PROGRAM WITH TAUGHT POSITIONS/ORIENTATIONS
CORRECTED BY ROBOT CONTROLLER

E: CORRECTION AMOUNTS OF POSITIONS/ORIENTATIONS AT
TAUGHT POINTS (CALCULATED BASED ON P1 AND P2)

Ef: FILE CONTAINING CORRECTION AMOUNTS OF POSITIONS/ORIENTATIONS
AT TAUGHT POINTS FOR PROGRAM P3

## FIG. 3

P1: PROGRAM PREPARED BY OFFLINE

E: STORED CORRECTION AMOUNTS OF POSITIONS/ORIENTATIONS
AT TAUGHT POINTS

P3: PROGRAM WITH TAUGHT POINTS ADDED/MODIFIED BY OFFLINE

P4: PROGRAM OBTAINED BY AMENDING PROGRAM P3 BASED ON CORRECTION
AMOUNTS

## FIG. 4

P1: PROGRAM PREPARED BY OFFLINE

E: STORED CORRECTION AMOUNTS OF POSITIONS/ORIENTATIONS
AT TAUGHT POINTS

P3: PROGRAM WITH TAUGHT POINTS ADDED/MODIFIED BY OFFLINE

Ef: FILE CONTAINING CORRECTION AMOUNTS OF POSITION/ORIENTATION AT
TAUGHT POINTS FOR PROGRAM P3

# FIG. 5

P1: PROGRAM PREPARED BY OFFLINE

E: CORRECTION AMOUNTS OF POSITIONS/ORIENTATIONS AT TAUGHT POINTS STORED IN ROBOT CONTROLLER

P3: PROGRAM WITH TAUGHT POINTS ADDED/MODIFIED BY OFFLINE

P4: PROGRAM OBTAINED BY AMENDING PROGRAM P3 BASED ON CORRECTION AMOUNTS

# FIG. 6

P1: PROGRAM PREPARED BY OFFLINE

E: CORRECTION AMOUNTS OF POSITIONS/ORIENTATIONS AT TAUGHT POINTS STORED IN ROBOT CONTROLLER

P3: PROGRAM WITH TAUGHT POINTS ADDED/MODIFIED BY OFFLINE

Ef: FILE CONTAINING CORRECTION AMOUNTS OF POSITION/ORIENTATION AT TAUGHT POINTS FOR PROGRAM P3

## FIG. 7

## FIG. 8

START

100 | READ PROGRAM P2 WITH TAUGHT POSITIONS/ORIENTATIONS CORRECTED BY ROBOT CONTROLLER

101 | $i \leftarrow 1$

102 | READ i-TH TAUGHT POINTS P1i , P2i OF PROGRAMS P1, P2, RESPECTIVELY

103 | $Ei = P2i - P1i$

104 | $i \leftarrow i + 1$

105 | i-TH TAUGHT POINT EXIST? — Yes

No

106 | PROCESSING FOR ADDITION AND/OR MODIFICATION OF TAUGHT POINTS IN PROGRAM P1, AND CALCULATION OF EXPECTED CORRECTION AMOUNTS Ex FOR ADDED OR MODIFIED TAUGHT POINTS

107 | ADD CORRECTION AMOUNTS TO POSITIONS/ ORIENTATIONS OF TAUGHT POINTS IN PROGRAM P3 TO PREPARE PROGRAM P4

108 | OUTPUT PROGRAM P4 TO ROBOT CONTROLLER

END

## FIG. 9

START

**200** READ PROGRAM P2 WITH TAUGHT POSITIONS/ORIENTATIONS CORRECTED BY ROBOT CONTROLLER

**201** $i \leftarrow 1$

**202** READ i-TH TAUGHT POINTS P1i , P2i OF PROGRAMS P1, P2, RESPECTIVELY

**203** $Ei = P2i - P1i$

**204** $i \leftarrow i + 1$

**205** i-TH TAUGHT POINT EXIST?

Yes

No

**206** PROCESSING FOR ADDITION AND/OR MODIFICATION OF TAUGHT POINTS IN PROGRAM P1, AND CALCULATION OF EXPECTED CORRECTION AMOUNTS Ex FOR ADDED OR MODIFIED TAUGHT POINTS

**207** OUTPUT PROGRAM P3 AND CORRECTION AMOUNTS E FOR TAUGHT POINTS TO ROBOT CONTROLLER

END

FIG.10

START

300 CORRECTION AMOUNTS STORED? — No

Yes

301 PROCESSING FOR ADDITION AND/OR MODIFICATION OF TAUGHT POINTS IN PROGRAM P1, AND CALCULATION OF CORRECTION AMOUNTS Ex FOR ADDED OR MODIFIED TAUGHT POINTS

302 ADD CORRECTION AMOUNTS TO POSITIONS/ ORIENTATIONS OF TAUGHT POINTS IN PROGRAM P3 TO CREATE PROGRAM P4

303 OUTPUT PROGRAM P4 TO ROBOT CONTROLLER

END

FIG.11

START

400 CORRECTION AMOUNTS STORED? — No

Yes

401 PROCESSING FOR ADDITION AND/OR MODIFICATION OF TAUGHT POINTS IN PROGRAM P1, AND CALCULATION OF CORRECTION AMOUNTS Ex FOR ADDED OR MODIFIED TAUGHT POINTS

402 OUTPUT PROGRAM P3 AND CORRECTION AMOUNTS E TO ROBOT CONTROLLER

END

EP 1 465 028 A2

## FIG.12

START

500 — READ CORRECTION AMOUNTS FOR POSITIONS/ ORIENTATIONS OF TAUGHT POINTS INPUTTED FROM ROBOT CONTROLLER

501 — PROCESSING FOR ADDITION AND/OR MODIFICATION OF TAUGHT POINTS IN PROGRAM P1, AND CALCULATION OF CORRECTION AMOUNTS Ex FOR ADDED OR MODIFIED TAUGHT POINTS

502 — ADD CORRECTION AMOUNTS TO POSITIONS/ ORIENTATIONS OF TAUGHT POINTS IN PROGRAM P3 TO CREATE PROGRAM P4

503 — OUTPUT PROGRAM P4 TO ROBOT CONTROLLER

END

## FIG.13

START

600 — READ CORRECTION AMOUNTS FOR POSITIONS/ ORIENTATIONS OF TAUGHT POINTS INPUTTED FROM ROBOT CONTROLLER

601 — PROCESSING FOR ADDITION AND/OR MODIFICATION OF TAUGHT POINTS IN PROGRAM P1, AND CALCULATION OF CORRECTION AMOUNTS Ex FOR ADDED OR MODIFIED TAUGHT POINTS

602 — OUTPUT PROGRAM P3 AND CORRECTION AMOUNTS E FOR TAUGHT POINTS INCLUDING ADDED AND/OR MODIFIED TAUGHT POINTS TO ROBOT CONTROLLER

END

20

# FIG.14

```
                    ┌─────────────┐
                    │    START    │
                    └──────┬──────┘
                           │
        ┌──────────────────┴──────────────────┐
  SB1   │  PROCESSING FOR ADDITION AND/        │
        │  OR MODIFICATION OF TAUGHT           │
        │  POINTS TO PREPARE PROGRAM P3        │
        └──────────────────┬──────────────────┘
                           │
        ┌──────────────────┴──────────────────┐
  SB2   │  DETERMINE POSITIONS OF TWO TAUGHT   │
        │  POINT POSITIONS Pj, Pk CLOSE TO ADDED│
        │  OR MODIFIED TAUGHT POINT POSITION Px │
        └──────────────────┬──────────────────┘
                           │
        ┌──────────────────┴──────────────────┐
  SB3   │         Ljk= | Pj−Pk |              │
        │         Lxj= | Px−Pj |              │
        │         Lxk= | Px−Pk |              │
        └──────────────────┬──────────────────┘
```

SB4: $Lmax \geq Lij$ — No / Yes

SB5: $Lmax \geq Lik$ — No / Yes

SB6: READ CORRECTED AMOUNTS Ej, Ek FOR TAUGHT POINT POSITIONS Pj, Pk

SB9: SET CORRECTION AMOUNT Ex FOR ADDED OR MODIFIED TAUGHT POINT TO ZERO

SB7: OBTAIN CORRECTION AMOUNT Ex FOR ADDED OR MODIFIED TAUGHT POINT
$$Ex = Ej * Lxk / Ljk + Ek * Lxj / Ljk$$

SB8: ADDITION AND/OR MODIFICATION OF TAUGHT POINTS COMPLETED? — No / Yes

RETURN